# DEMANDE DE BREVET EUROPEEN

(11) **EP 4 338 851 A1**
(43) Date de publication de la demande: **20.03.2024**
(21) Numéro de dépôt: 23197791.9
(22) Date de dépôt: 15.09.2023
(51) Int. Cl.: B05C 3/18, B05D 1/26, B05D 1/34, B05D 5/12, H01M 4/04, H01M 4/88, B05C 9/06, B05C 11/04

(54) **PROCÉDÉ DE DÉPÔT SIMULTANÉ DE PLUSIEURS ENCRES CONDUCTRICES DIFFÉRENTES DE MANIÈRE ADJACENTE SUR UN MÊME SUBSTRAT**

(30) Priorité: 16.09.2022 FR 2209369
(71) Demandeur: Commissariat à l'énergie atomique et aux énergies alternatives, 75015 Paris (FR)
(72) Inventeur: NAYOZE-COYNEL, Christine, 38054 GRENOBLE cedex 09 (FR)
(74) Mandataire: INNOV-GROUP

(57) **Abrégé**

L'invention porte sur un procédé de dépôt simultané, sur une même face d'un substrat (1), de plusieurs encres électriquement conductrices et de compositions chimiques différentes. Le procédé comporte les étapes suivantes :
∘ placer, sur la face du substrat (1), une racle de dépôt (10) à laquelle est assemblée au moins une lamelle de séparation (20), ainsi que les encres s'étendant longitudinalement de manière coaxiale et adjacente l'une à l'autre, de sorte que les encres sont au contact de la racle de dépôt (10) et de la lamelle de séparation (20) et sont séparées physiquement l'une de l'autre par la lamelle de séparation (20) ;
∘ effectuer un déplacement relatif de la racle de dépôt (10) vis-à-vis du substrat (1), déposant ainsi simultanément les encres sur le substrat (1) de manière adjacente l'une à l'autre.

## Description

### DOMAINE TECHNIQUE

Le domaine de l'invention est celui du dépôt à la racle, par exemple par sérigraphie ou par enduction, de plusieurs encres électriquement conductrices sur une même face d'un substrat, notamment dans le cadre de la fabrication des électrodes d'une cellule électrochimique, par exemple de type à membrane échangeuse de protons.

### ÉTAT DE LA TECHNIQUE ANTÉRIEURE

La fabrication des électrodes d'une cellule électrochimique comporte généralement le dépôt sur un substrat d'une encre électriquement conductrice. Par exemple, dans le cadre d'une cellule électrochimique à membrane échangeuse de protons (PEM pour *Proton Exchange Membrane,* en anglais), l'encre conductrice peut ainsi être déposée sur une couche poreuse de diffusion de gaz ou directement sur la membrane polymère électrolytique. Après séchage, l'encre déposée forme alors l'anode ou la cathode de la cellule électrochimique.

Le dépôt d'une telle encre conductrice peut être réalisé par une technique de dépôt à la racle par enduction ou par sérigraphie. A ce titre, le document WO2010/079184 illustre des exemples de dépôt d'une encre conductrice par enduction et par sérigraphie, pour la fabrication d'un électrolyseur haute température. Dans le cadre du dépôt par enduction, la racle de dépôt coopère ici avec un réservoir pour recevoir l'encre à déposer. Le réservoir comporte ainsi une ouverture inférieure permettant à l'encre de venir au contact du substrat et d'une surface d'appui de la racle de dépôt. Celle-ci présente une extrémité inférieure espacée du substrat d'une distance non nulle. Ainsi, lorsque la racle de dépôt est déplacée en translation par rapport au substrat, l'encre est déposée sur ce dernier et forme une couche continue d'épaisseur contrôlée. Dans le cadre du dépôt par sérigraphie, un cordon d'encre est alors déposé sur un écran qui recouvre le substrat et présente un maillage ouvert. La racle de dépôt se déplace en translation en appliquant un effort de cisaillement suffisant pour que l'encre traverse les ouvertures de l'écran et vienne se déposer de manière localisée sur le substrat.

Cependant, on comprend que ces procédés ne permettent de ne déposer qu'une encre conductrice à la fois. Or, il peut être nécessaire de déposer sur une même face du substrat des encres différentes en termes de composition chimique. Pour cela, il est généralement prévu de déposer une première encre sur une zone prédéfinie du substrat, et ensuite une deuxième encre sur une autre zone prédéfinie, adjacente à la première zone. Il apparaît toutefois qu'il existe un risque de superposition d'une encre sur l'autre, ce qui peut conduire à une dégradation des performances du dispositif à fabriquer, ici par exemple la cellule électrochimique.

### EXPOSÉ DE L'INVENTION

L'invention a pour objectif de remédier au moins en partie aux inconvénients de l'art antérieur, et plus particulièrement de proposer un procédé de dépôt simultané de plusieurs encres conductrices différentes sur une même face d'un substrat.

Pour cela, l'objet de l'invention est un procédé de dépôt conforme à la revendication 1.

Certains aspects préférés mais non limitatifs de ce procédé de dépôt sont détaillés dans les revendications dépendantes.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
la figure 1A est une vue en coupe longitudinale, schématique et partielle, illustrant différentes étapes d'un procédé de dépôt simultané d'encres différentes, selon un mode de réalisation où le dépôt est de type enduction ;
la figure 1B est une vue de dessus, schématique et partielle, de la racle de dépôt munie d'une lamelle de séparation lors d'une étape de dépôt par enduction de la fig.1A ;
la figure 2A est une vue en perspective, schématique et partielle, d'une racle de dépôt munie d'une lamelle de séparation, selon un exemple de réalisation illustré sur la fig.1A ;
la figure 2B est une vue en perspective, schématique et partielle, d'une racle de dépôt munie d'une lamelle de séparation, selon un autre exemple de réalisation où la racle forme un filmographe à spirale (de type vis sans vis) ;
la figure 3A est une vue en coupe longitudinale, schématique et partielle, illustrant une étape d'un procédé de dépôt simultané d'encres différentes, selon une variante de réalisation où le dépôt est de type enduction, et où le racle de dépôt coopère avec un réservoir des encres à déposer ;
la figure 3B est une vue de dessus, schématique et partielle, de la racle de dépôt munie d'une lamelle de séparation, et du réservoir, tels qu'illustrés sur la fig.3A ;
la figure 3C est une vue en perspective, schématique et partielle, d'une racle de dépôt munie d'une lamelle de séparation, et du réservoir, tels qu'illustrés sur la fig.3A ;
la figure 4A est une vue en coupe longitudinale, schématique et partielle, illustrant une étape d'un procédé de dépôt simultané d'encres différentes, selon un autre mode de réalisation où le dépôt est de type sérigraphie ;
la figure 4B est une vue en coupe longitudinale, schématique et partielle, illustrant une autre étape du procédé de dépôt simultané d'encres différentes selon le mode de réalisation de la fig.4A ;
la figure 5A est une vue de dessus, schématique et partielle, de la racle de dépôt munie de la lamelle de séparation, illustrant l'étape de la fig.4B ;
la figure 5B est une vue de dessus, schématique et partielle, de la racle de dépôt munie de plusieurs lamelles de séparation distribuées le long d'une même surface d'appui de la racle, et assurant une séparation physique de plusieurs cordons d'encres différentes.

### EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près, et de préférence à 5% près. Par ailleurs, les termes « compris entre ... et ... » et équivalents signifient que les bornes sont incluses, sauf mention contraire.

L'invention porte sur un procédé de dépôt simultané, sur une même face d'un substrat, d'au moins deux encres électriquement conductrices et de compositions chimiques différentes. Le dépôt est ici un dépôt à la racle et peut être de type sérigraphie ou de type enduction. Le dépôt est dit simultané dans le sens où les encres sont déposées sur le substrat en même temps, i.e. lors d'un même déplacement relatif de la racle de dépôt par rapport au substrat.

Une encre est un liquide électriquement conducteur, qui peut, en fonction des applications visées, être destiné à réaliser une électrode. Ainsi, dans le cas de la fabrication d'une cellule électrochimique à membrane échangeuse de protons, l'encre peut alors être destinée à former, après séchage, une électrode qui est au contact par exemple d'une membrane polymère électrolytique. Habituellement, une encre peut comporter, entre autres, un matériau électrochimiquement actif, un matériau électriquement conducteur comme un matériau carboné, et éventuellement un liant ainsi qu'un solvant destiné à s'évaporer après dépôt. La composition chimique de l'encre dépend des applications visées. Dans le cadre de l'invention, différentes encres en termes de composition chimique sont déposées simultanément sur la même face du substrat. Elles diffèrent entre elles par exemple par la nature et/ou la concentration du matériau actif et/ou du matériau conducteur.

Le substrat dépend de l'application visée. Ainsi, dans le cadre de la fabrication d'une cellule électrochimique à membrane échangeuse de protons, il peut s'agir de la membrane électrolytique, d'une couche poreuse de diffusion des gaz, voire d'un substrat temporaire destiné à recevoir l'encre puis à la reporter après séchage sur un autre élément de la cellule électrochimique, par exemple la membrane électrolytique. La cellule électrochimique peut être de type PEM, mais il peut également s'agir d'une batterie lithium-ion, lithium-soufre, etc... Le substrat peut également être un élément d'un dispositif électronique ou optoélectronique tel qu'une cellule photovoltaïque, un dispositif CCD ou CMOS, voire un dispositif optique à photodétecteurs ou à diodes émissives. Dans la suite de la description, et à but illustratif, le procédé de dépôt est effectué dans le cadre de la fabrication d'une cellule électrochimique de type PEM.

D'une manière générale, le procédé de dépôt consiste à placer sur une même face du substrat, d'une part une racle de dépôt à laquelle est assemblée au moins une lamelle de séparation, et d'autre part les encres s'étendant longitudinalement de manière coaxiale et adjacente l'une à l'autre, de sorte que les encres sont au contact de la racle de dépôt et de la lamelle de séparation, et séparées physiquement l'une de l'autre par la lamelle de séparation. Puis on effectue un déplacement relatif de la racle de dépôt vis-à-vis du substrat, ce qui conduit au dépôt simultané des encres sur le substrat de manière adjacente l'une à l'autre. Par adjacent, on entend que les couches d'encre alors déposées sont situées à proximité l'une de l'autre dans le plan du substrat, et sont séparées d'une distance qui peut être nulle.

Ainsi, les encres sont déposées de manière simultanée sur des zones adjacentes d'une même face du substrat, ce qui permet de réduire les coûts et le temps de fabrication par rapport aux procédés de l'art antérieur. Les encres peuvent ainsi sécher en même temps, ce qui permet de contrôler précisément leur étendue spatiale dans le plan du substrat, et ainsi d'écarter les risques de recouvrement, chevauchement, ou superposition d'une encre par l'autre comme ça peut être le cas avec les procédés de l'art antérieur. On est alors en mesure de réaliser un dispositif final (par exemple ici une cellule électrochimique) ayant les propriétés ou performances attendues.

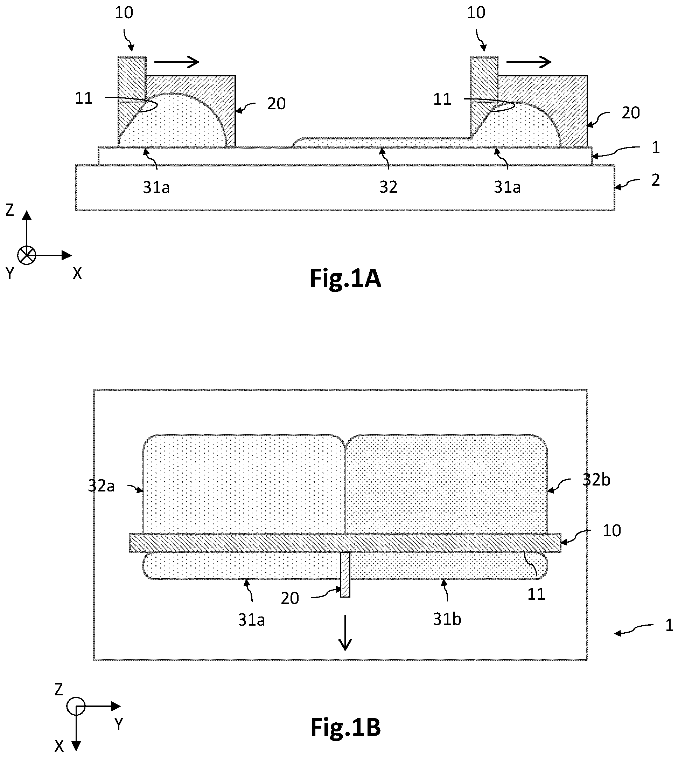

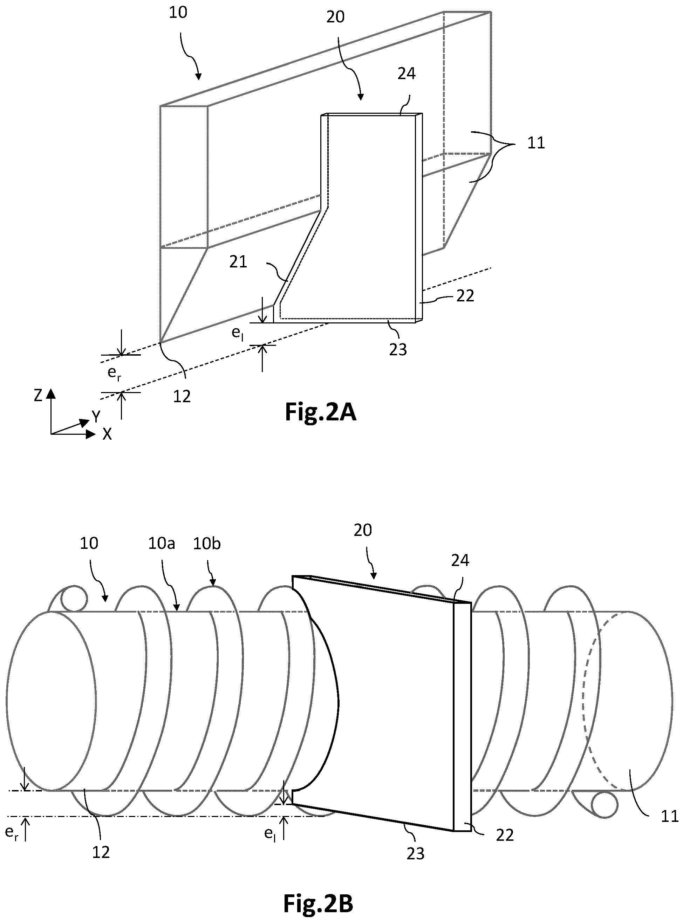

La figure 1A est une vue schématique et partielle, en coupe longitudinale, qui illustre des étapes du procédé de dépôt selon un mode de réalisation, dans le cas d'un dépôt de type par enduction, et la figure 1B est une vue de dessus d'une étape illustrée sur la fig.1A. La figure 2A est une vue en perspective de la racle de dépôt 10 munie d'une lamelle de séparation 20 telle qu'illustrée sur la fig.1A.

Dans cet exemple, le dépôt des encres est effectué dans le cadre de la fabrication d'une cellule électrochimique de type PEM, et le substrat 1 peut être par exemple une couche poreuse de diffusion de gaz ou un support inerte. Comme indiqué précédemment, cet exemple est donné à titre purement illustratif, et d'autres configurations sont évidemment possibles. Le substrat 1 repose ici sur un support plan 2.

On définit ici et pour la suite de la description un repère orthonormé tridimensionnel XYZ, où le plan horizontal XY est sensiblement parallèle au plan du substrat 1, l'axe X étant l'axe de déplacement de la racle de dépôt 10 par rapport au substrat 1.

La racle de dépôt 10 comporte au moins une surface latérale 11 dite d'appui destinée à être au contact des encres lors de l'étape de dépôt. Cette surface d'appui 11 est donc orientée suivant la direction de dépôt, ici suivant la direction +X. La racle de dépôt 10 peut présenter toutes sortes de configuration, connues notamment sous les termes anglais de *casting knife film applicators, doctor blade,* etc... Dans cet exemple, la surface d'appui 11 s'étend de manière plane suivant l'axe transversal Y, et est ici inclinée par rapport à l'axe vertical Z.

Au moins une lamelle de séparation 20 est assemblée à la racle de dépôt 10. Elle est destinée à assurer une séparation physique entre les encres à déposer, suivant l'axe transversal Y.

Une lamelle de séparation 20 est une feuille ou une plaque de faible épaisseur, réalisée en un matériau chimiquement inerte vis-à-vis des encres à déposer et vis-à-vis du substrat 1, et étanche aux encres, par exemple en plastique, en polytétrafluoroéthylène (PTFE), etc.... Le matériau est suffisamment rigide pour que la lamelle de séparation ne se déforme pas ou peu lors du déplacement de la racle de dépôt 10.

Elle présente une longueur suivant l'axe X définie entre une extrémité latérale aval 21 et une extrémité latérale amont 22, et une hauteur suivant l'axe Z définie entre une extrémité inférieure 23 et une extrémité supérieure 24. Les longueur et hauteur de la lamelle de séparation 20 sont supérieures à son épaisseur.

Les dimensions de la lamelle de séparation 20 dans le plan XZ dépendent en particulier de celles des cordons d'encre 31a, 31b, lesquels sont à déposer ici par enduction. Elles sont plus précisément supérieures à celles des cordons d'encre 31a, 31b de manière à assurer une séparation physique effective (séparation suivant l'axe Y) entre les encres à déposer, que la racle de dépôt 10 soit au repos ou en déplacement. Ainsi, l'extrémité latérale amont 22 est distante de la surface d'appui 11 d'une valeur maximale supérieure à la largeur de chacun des cordons d'encre 31a, 31b suivant l'axe X. L'extrémité inférieure 23 est de préférence rectiligne et est agencée pour être sensiblement parallèle à la surface sensiblement plane du substrat 1.

A titre d'exemple, pour des cordons d'encre 31a, 31b d'une épaisseur (suivant l'axe Z) et d'une largeur (suivant l'axe X) de quelques millimètres, par exemple 2mm en épaisseur et 3mm en largeur, la lamelle de séparation 20 présente une hauteur (suivant l'axe Z) supérieure à 2mm, par exemple égale à 3mm, et une longueur (suivant l'axe X) supérieure à 3mm, par exemple égale à 4mm. Son épaisseur suivant l'axe Y peut être de l'ordre d'une à plusieurs centaines de microns, et peut être ajustée de manière à ce que les couches d'encre déposées viennent au contact l'une de l'autre (comme détaillé plus loin). Elle peut ainsi être comprise entre 80 et 500 µm environ.

La lamelle de séparation 20 est assemblée à la racle de dépôt 10 de sorte que son extrémité latérale 21 est au contact d'au moins la surface d'appui 11. L'assemblage peut être une fixation au moyen par exemple d'une colle, auquel cas la lamelle de séparation 20 ne peut être déplacée suivant l'axe Y le long de la racle de dépôt 10. En variante, elle peut être maintenue au contact de la racle de dépôt 10 au moyen d'un dispositif de maintien (non représenté), qui peut également assurer un déplacement en translation de la lamelle de séparation 20 le long de la racle de dépôt 10 suivant l'axe Y.

La lamelle de séparation 20 est agencée vis-à-vis de la racle de dépôt 10 de sorte qu'elle s'étend de manière sensiblement orthogonale à la surface d'appui 11. Elle peut ainsi s'étendre de manière parallèle à l'axe X ou de manière légèrement inclinée par rapport à cet axe. Ainsi, elle s'étend en particulier vers le substrat 1, suivant la direction -Z, au-delà de l'extrémité inférieure 12 de la racle de dépôt 10 (et donc de la surface d'appui 11). En effet, au cours de l'étape de dépôt par enduction, la racle de dépôt 10 est espacée du substrat 1 d'une distance eᵣ non nulle suivant l'axe vertical Z, par exemple de l'ordre de 100µm, de sorte que les cordons d'encre 31a, 31b sont déposés sur le substrat 1 sous la forme de couches continues 32a, 32b d'épaisseur contrôlée.

Rappelons ici que, d'une manière générale, l'épaisseur des couches d'encre 32a et 32b correspond à celle des encres (donc liquides) qui viennent d'être déposées, et non pas à celle du dépôt solide obtenu après l'évaporation du solvant lors du séchage des encres.

Par ailleurs, pour assurer une séparation physique efficace entre les cordons d'encre 31a, 31b, la lamelle de séparation 20 s'étend suivant l'axe Z de manière à former un espacement eₗ entre son extrémité inférieure 23 et le substrat 1. La valeur de cet espacement eₗ peut être égale ou inférieure à la valeur de l'espacement eᵣ entre la racle de dépôt 10 et le substrat 1. De préférence, l'espacement eₗ est inférieur à eᵣ, par exemple inférieure ou égale au cinquième de eᵣ, voire au dixième de eᵣ. Il peut également être nulle dans le cas d'un substrat inerte et non fragile tel que le PTFE (auquel cas il y a un contact de l'extrémité inférieure 23 de la lamelle de séparation 20 avec le substrat 1).

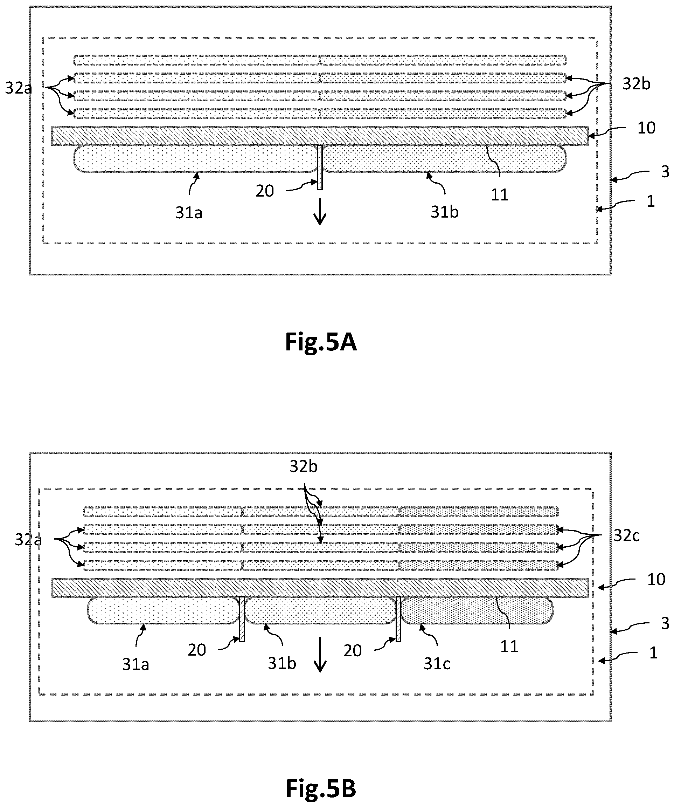

Dans cet exemple, deux encres conductrices et de compositions chimiques différentes sont déposées par enduction simultanément sur le substrat 1, de manière à former deux couches 32a, 32b d'encre adjacentes l'une à l'autre, ici des couches continues dans le plan XY. Bien évidemment, un plus grand nombre d'encres peuvent être déposées, chaque encre étant alors séparée physiquement de l'encre voisine par une lamelle de séparation 20. Dans cet exemple, une seule lamelle de séparation 20 est prévue dans la mesure où on souhaite déposer deux encres différentes. Plusieurs lamelles peuvent être prévues si l'on souhaite déposer plus de deux encres différentes, chaque lamelle étant alors disposée suivant l'axe transversal Y de manière à séparer chaque encre de l'encre adjacente. La figure 5B décrite plus loin illustre cette possibilité.

Pour effectuer un dépôt par enduction efficace et obtenir des couches d'encre 32a, 32b déposées ayant l'épaisseur désirée, par exemple de l'ordre de 100µm, les encres présentent de préférence une viscosité au repos (sans contrainte de cisaillement) comprise entre 0.1 et 50 Pa.s (valeur dite initiale). Par ailleurs, la mouillabilité des encres sur la surface du substrat 1 est de préférence choisie de sorte que l'angle de mouillage est inférieur ou égal à environ 90°, et de préférence compris entre 70° et 90° environ.

Notons que la vitesse du déplacement relatif de la racle de dépôt 10 vis-à-vis du substrat 1 dépend notamment de la viscosité effective des encres lors de l'étape de dépôt. En effet, il est connu que de telles encres présentent des propriétés rhéologiques telles que la rhéofluidification et la thixotropie, qui se traduisent par le fait que la viscosité effective des encres lors de l'étape de dépôt est, localement, inférieure à sa viscosité au repos. Cette diminution locale de la viscosité est particulièrement présente dans la zone où les encres subissent un effort de cisaillement important, à savoir dans la zone située entre l'extrémité inférieure 12 de la racle de dépôt 10 et la surface du substrat 1.

D'une manière générale, un liquide est dit rhéofluidifiant lorsque sa viscosité diminue lorsque le taux de cisaillement augmente. Ici, en première approximation, le taux de cisaillement est le plus élevé dans la zone située entre la surface d'appui 11 (et l'extrémité inférieure 12) et la surface du substrat 1. Aussi, au cours de l'étape de dépôt, la viscosité locale de l'encre y est la plus faible. Cela autorise les couches 32a, 32b d'encre déposées de s'étaler légèrement et ainsi venir au contact l'une de l'autre.

De plus, un liquide est dit thixotrope lorsque sa viscosité diminue au cours du temps, à contrainte mécanique constante. Ici, lorsque les couches d'encre 32a, 32b sont déposées (après le passage de la racle de dépôt 10), les encres retrouvent sa viscosité initiale. Cela permet notamment que les couches d'encre 32a, 32b s'étendent sur une étendue surfacique dans le plan XY souhaitée, et présentent l'épaisseur voulue.

Comme l'illustrent les fig.1A et 1B, le procédé de dépôt simultané, ici des deux encres, par enduction, consiste, tout d'abord, à placer, sur la face du substrat 1, la racle de dépôt 10 munie de la lamelle de séparation 20, ainsi que les encres sous forme de cordons 31a, 31b.

Un cordon d'encre 31 est un volume d'encre sensiblement cylindrique, qui s'étend ici sur le substrat 1 et dont la longueur est orientée suivant l'axe Y. Il présente une épaisseur maximale suivant l'axe vertical Z, qui peut être de l'ordre du millimètre (par exemple 2 à 3 mm d'épaisseur), et une largeur suivant l'axe X qui peut être supérieure à son épaisseur.

Les cordons d'encre 31a, 31b s'étendent longitudinalement de manière coaxiale suivant l'axe Y. Ils sont adjacents l'un à l'autre dans le sens où l'extrémité de l'un est en regard de l'extrémité de l'autre, et sont séparés physiquement l'un de l'autre uniquement par la lamelle de séparation 20.

Les cordons d'encre 31a, 31b sont en effet au contact de la racle de dépôt 10 et plus précisément de la surface d'appui 11 d'une part, et sont également au contact de la lamelle de séparation 20 d'autre part. Ainsi, la lamelle de séparation 20 sépare les cordons d'encre 31a, 31b l'un de l'autre suivant l'axe Y.

Le procédé de dépôt consiste ensuite à étaler les encres de manière simultanée sur le substrat 1 pour former deux couches continues d'encre 32a, 32b adjacentes l'une à l'autre. Pour cela, on effectue un déplacement relatif de la racle de dépôt 10 vis-à-vis du substrat 1. Dans cet exemple, le substrat 1 reste fixe et la racle de dépôt 10 est déplacée en translation suivant l'axe longitudinal X.

La racle de dépôt 10 exerce alors un effort mécanique sur les cordons d'encre 31a, 31b suivant la direction +X, ce qui déplace les cordons d'encre 31a, 31b tout en induisant la formation simultanée des couches continues 32a, 32b en aval de la racle de dépôt 10.

Ainsi, lors du déplacement de la racle de dépôt 10, les cordons d'encre 31a, 31b restent séparés l'une de l'autre du fait de la lamelle de séparation 20. De plus, les encres qui passent sous la racle de dépôt 10 présentent une valeur locale de viscosité qui est inférieure à la valeur initiale de repos, de sorte que les encres peuvent s'étaler légèrement suivant l'axe transversal Y du fait de ses propriétés rhéologiques. Les couches continues d'encre 32a, 32b peuvent alors venir au contact l'une de l'autre au niveau des extrémités latérales en regard l'une de l'autre. C'est ce qui est observé pour une épaisseur de lamelle de séparation 20 comprise entre 80 et 500µm environ, et une valeur initiale de viscosité d'encres comprise entre 0.1 à 50 Pa.s. Cette valeur initiale de viscosité (également appelée viscosité au repos) est mesurée pour une vitesse de cisaillement de 0.5 s⁻¹, par exemple au moyen d'un rhéomètre Kinexus Lab+ de Malvern Instruments ayant une géométrie de modules de forme cône-plan CP4/40 (angle 4° ; diamètre 40 mm).

Les couches continues 32a, 32b d'encre déposées retrouvent ensuite leur valeur initiale de viscosité, de sorte que l'étalement dans le plan XY s'arrête. Ainsi, on a déposé sur la même face du substrat 1 deux couches d'encre 32a, 32b de manière simultanée, sans risque de superposition ou, de chevauchement d'une couche d'encre sur l'autre. De plus, par l'ajustement de l'épaisseur de la lamelle de séparation 20 en fonction de la variation de viscosité entre ses valeurs minimale et initiale, il est possible d'obtenir des couches 32a, 32b d'encre venant au contact l'une de l'autre.

La figure 2B est une vue schématique et partielle, en perspective, d'une racle de dépôt 10 munie d'une lamelle de séparation 20 selon une variante de réalisation, dans le cas d'un dépôt par enduction.

Dans cet exemple, la racle de dépôt 10 comporte un corps cylindrique 10a et au moins une partie en saillie 10b qui entoure le corps cylindrique 10a radialement. Dans cet exemple, la partie en saillie 10b est un fil assemblé au corps cylindrique qui s'étend suivant l'axe Y avec une période prédéfinie pour former une spirale : il s'agit ici d'une racle de dépôt de type filmographe à spirale (ou vis sans fin). La partie en saillie 10b est destinée à venir au contact du substrat 1 de manière à définir l'espacement eᵣ entre le corps cylindrique 10a et le substrat 1. Ses dimensions (diamètre, ou largeur et hauteur) sont choisies en fonction de l'espacement eᵣ souhaité. En variante, plusieurs fils distincts peuvent être prévus qui entourent le corps cylindrique chacun dans un plan radial parallèle au plan XZ.

Le corps cylindrique 10a présente ici une section sensiblement circulaire mais d'autres formes de section sont possibles. Il s'étend longitudinalement suivant l'axe Y. La surface d'appui 11 de la racle de dépôt 10 est ici la surface du corps cylindrique 10a orientée vers la direction +X. Le corps cylindrique 10a présente une extrémité inférieure 12 destinée à être espacée de la surface du substrat 1 d'une distance eᵣ non nulle fixée par la hauteur du fil 10b (celui-ci étant au contact du substrat 1), permettant ainsi de contrôler l'épaisseur des couches d'encre déposées 32a, 32b.

La lamelle de séparation 20 est assemblée à la racle de dépôt 10 en venant entourer au moins en partie celle-ci dans un plan XZ. Comme précédemment, elle s'étend à partir de la surface d'appui 11 jusqu'à l'extrémité latérale 22 sur une distance supérieure à la largeur des cordons d'encre 31a, 31b suivant l'axe X. Elle présente une hauteur entre ses extrémités inférieure 23 et supérieure 24 au moins égale à l'épaisseur des cordons d'encre 31 suivant l'axe Z. Enfin, l'extrémité inférieure 23 est destinée à être espacée de la surface du substrat 1 d'une distance eₗ qui peut être inférieure ou égale à la distance eᵣ.

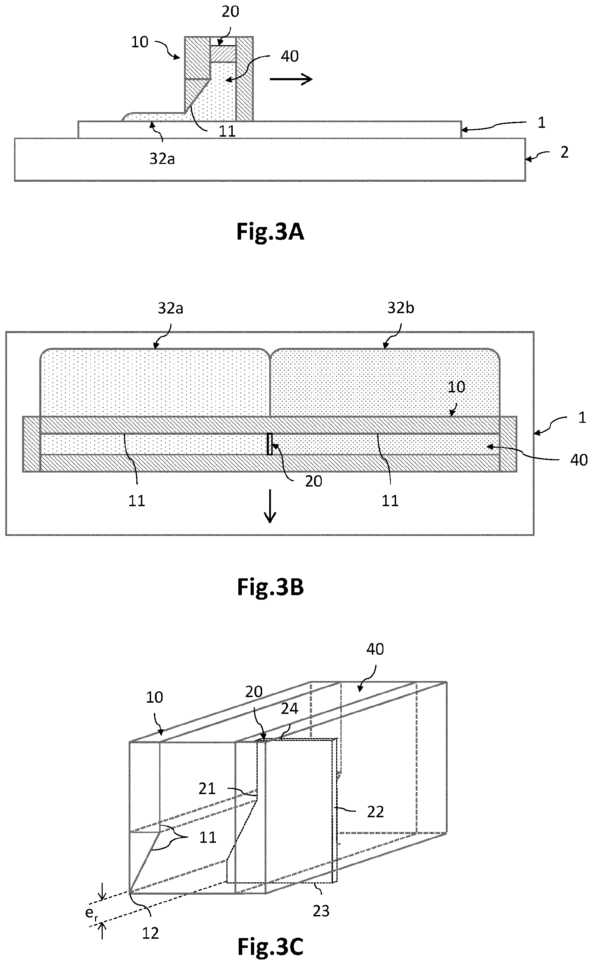

Les figures 3A, 3B et 3C sont des vues schématiques et partielles, en coupe longitudinale et en vue de dessus, de la racle de dépôt 10 et de la lamelle de séparation 20, selon une autre variante de réalisation, également dans le cas d'un dépôt par enduction.

Dans cet exemple, la racle de dépôt 10 coopère avec un réservoir 40 contenant les encres à déposer, pour former un même dispositif de dépôt. Différentes configurations d'un tel dispositif de dépôt sont possibles, et peuvent différer entre elles notamment par l'agencement et l'orientation des parois intérieures délimitant le réservoir 40 et de la surface d'appui 11 de la racle de dépôt 10. Une ouverture inférieure du réservoir 40, éventuellement obturable, permet aux encres contenues dans le réservoir 40 de s'écouler et venir au contact du substrat 1. Le dispositif de dépôt peut être de type revêtement par fente (*slot die coating*, en anglais).

La lamelle de séparation 20 est assemblée à la surface d'appui 11 de la racle de dépôt 10, et s'étend ici dans le réservoir 40 pour assurer une séparation physique des différentes encres (définissant ainsi plusieurs compartiments séparés). Elle assure donc ici une séparation des encres, tant lors du stockage dans le réservoir 40 que lors du dépôt par enduction. Aussi, la lamelle de séparation 20 vient au contact de la paroi intérieure du réservoir 40 faisant face à la surface d'appui 11. Les dimensions de la lamelle de séparation 20 peuvent être identiques ou similaires à ce qui a été indiqué précédemment.

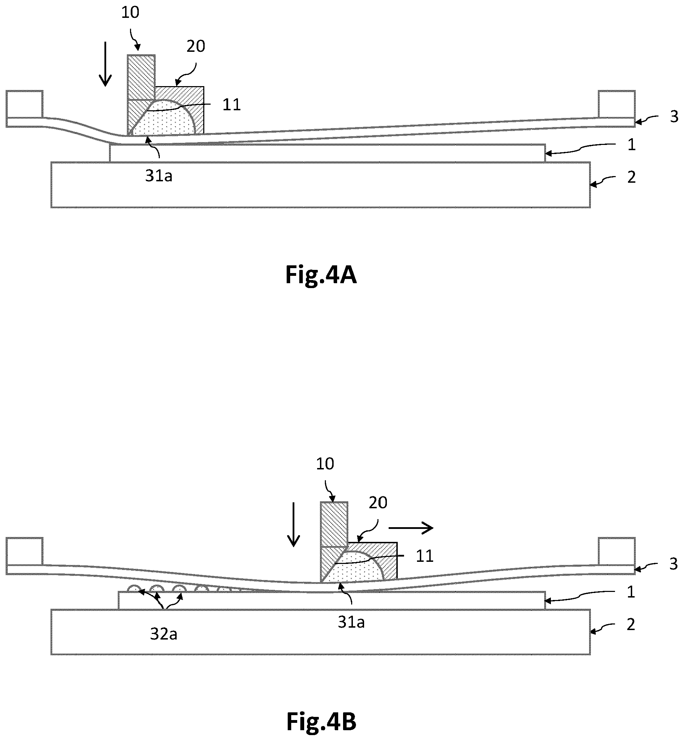

Les figures 4A et 4B sont des vues schématiques et partielles, en coupe longitudinale, illustrant différentes étapes d'un procédé de dépôt selon un autre mode de réalisation de l'invention, ici de type par sérigraphie. La figure 5A est une vue de dessus de l'étape de dépôt de la fig.4B. Sur la fig.5A, on représente en traits pointillés ce qui est situé en-dessous de l'écran 3.

Dans le cadre d'un dépôt par sérigraphie, que l'on appelle également impression par sérigraphie, on utilise un écran 3 (ou masque) présentant un maillage ouvert, c'est-à-dire une série d'ouvertures, disposé au-dessus et éventuellement à distance du substrat 1.

L'écran 3 est espacé du substrat 1 d'une distance ici non nulle, par exemple de l'ordre de quelques millimètres. Il comporte des ouvertures traversantes au travers desquelles les encres peuvent être transférées sous l'effort mécanique exercé par la racle de dépôt 10.

La racle de dépôt 10 et la lamelle de séparation 20 sont similaires ou identiques à celles décrites précédemment, et ne sont donc pas détaillées à nouveau. Dans cet exemple, on dépose deux encres différentes, auquel cas la racle de dépôt 10 est munie d'une seule lamelle de séparation 20.

Comme l'illustre la fig.4A, le procédé de dépôt simultané par sérigraphie, ici des deux encres, consiste tout d'abord à placer sur la face du substrat la racle de dépôt 10 munie de la lamelle de séparation 20, ainsi que les encres sous forme de cordons 31a, 31b. Les cordons d'encre 31a, 31b sont disposés sur et au contact de l'écran 3, de sorte qu'ils s'étendent longitudinalement suivant l'axe Y de manière coaxiale. Ils sont séparés l'un de l'autre par la lamelle de séparation 20 assemblée à la racle de dépôt 10. La racle de dépôt 10 appuie sur l'écran 3 de sorte qu'il vient au contact du substrat 1.

Comme l'illustre la fig.4B et la fig.5A, le procédé de dépôt simultané comporte ensuite le déplacement relatif de la racle de dépôt 10 vis-à-vis du substrat 1, de sorte que les cordons d'encre 31a, 31b sont déplacés suivant l'axe X et subissent un effort de cisaillement orienté suivant les directions +X et -Z, ce qui contraint les encres à traverser les ouvertures traversantes de l'écran 3 et à venir se déposer directement sur le substrat 1. Dans cet exemple, les ouvertures traversantes sont allongées suivant l'axe Y mais d'autres formes sont bien entendu possibles.

Comme indiqué précédemment, les propriétés rhéologiques des encres se traduisent par une diminution de la viscosité locale dans la zone proche de la surface d'appui 11 et de la surface de l'écran 3, là où la contrainte de cisaillement est la plus importante. Cette diminution de la viscosité locale permet aux encres de s'écouler efficacement au travers de l'écran 3 jusqu'au substrat 1. Lorsque la racle de dépôt 10 est passée, les différentes couches d'encre 32a, 32b déposées présentent une viscosité qui reprend sa valeur initiale, de sorte qu'elles présentent effectivement l'étendue dans le plan XY et l'épaisseur suivant l'axe Z souhaitées. De plus, le fait que les encres retrouvent leur valeur initiale de viscosité permet de retirer l'écran avec peu ou pas de risques de dégradation des couches d'encre déposées.

De plus, dans la mesure où les couches d'encre 32a, 32b déposées présentent tout d'abord une viscosité réduite, elles peuvent s'étaler légèrement dans le plan XY et en particulier suivant l'axe Y, avant de se « figer » lorsque la viscosité reprend sa valeur initiale. Ainsi, une couche 32a d'une première encre peut venir au contact de la couche 32b de la deuxième encre suivant l'axe Y, de sorte qu'il y a une continuité de matière entre les deux couches 32a, 32b adjacentes, et sans qu'il y ait de superposition ou chevauchement d'une couche par l'autre.

Notons à ce titre que les encres présentent une valeur initiale de viscosité, c'est-à-dire une viscosité dite au repos mesurée sous une contrainte de cisaillement de 0.5 s⁻¹ par le rhéomètre indiqué plus haut, comprise de préférence entre 0.1 et 60 Pa.s environ. Comme précédemment, la vitesse de déplacement relatif de la racle de dépôt 10 peut être ajustée en fonction de la viscosité initiale des encres, de manière à générer des contraintes de cisaillement plus ou moins importantes, permettant d'assurer un bon écoulement des encres au travers de l'écran 3. De plus, pour une viscosité au repos comprise entre 0.1 et 50 Pa.s et une lamelle de séparation 20 d'épaisseur comprise entre 80 et 500µm environ, il est observé que les couches d'encre 32a, 32b déposées s'étalent légèrement pour venir au contact l'une de l'autre.

Des modes de réalisation particuliers viennent d'être décrits. Différentes variantes et modifications apparaîtront à l'homme du métier.

Ainsi, la figure 5B est une vue de dessus, schématique et partielle, d'une racle de dépôt 10 munie de plusieurs lamelles de séparation 20, permettant de déposer de manière simultanée plusieurs encres différentes, ici trois encres différentes. Sur la fig.5B, on représente en traits pointillés ce qui est situé en-dessous de l'écran 3.

En effet, comme indiqué précédemment, la racle de dépôt 10 peut être munie de plusieurs lamelles de séparation 20 assemblées à la même surface d'appui 11, et distribuées suivant l'axe transversal Y. Chaque lamelle de séparation 20 assure la séparation physique de deux encres différentes adjacentes. Cette configuration s'applique au procédé de sérigraphie comme au procédé d'enduction, et aux différents types de racle de dépôt 10.

## Revendications

1. Procédé de dépôt simultané, sur une même face d'un substrat (1), de plusieurs encres électriquement conductrices et de compositions chimiques différentes, comportant les étapes suivantes :
∘ placer, sur la face du substrat (1), une racle de dépôt (10) à laquelle est assemblée au moins une lamelle de séparation (20), ainsi que les encres s'étendant longitudinalement de manière coaxiale et adjacente l'une à l'autre, de sorte que les encres sont au contact de la racle de dépôt (10) et de la lamelle de séparation (20) et sont séparées physiquement l'une de l'autre par la lamelle de séparation (20) ;
∘ effectuer un déplacement relatif de la racle de dépôt (10) vis-à-vis du substrat (1), déposant ainsi simultanément les encres sur le substrat (1) de manière adjacente l'une à l'autre.

2. Procédé de dépôt selon la revendication 1, dans lequel la racle de dépôt (10) comporte au moins une surface d'appui (11) venant au contact des encres à déposer, au moins une lamelle de séparation (20) étant assemblée à la surface d'appui (11).

3. Procédé de dépôt selon la revendication 2, dans lequel la lamelle de séparation (20) s'étend de manière orthogonale par rapport à la surface d'appui (11).

4. Procédé de dépôt selon la revendication 2 ou 3, dans lequel au moins deux lamelles de séparation (20) sont assemblées à ladite surface d'appui (11), chaque lamelle de séparation assurant une séparation physique de deux encres différentes l'une de l'autre.

5. Procédé de dépôt selon l'une quelconque des revendications 1 à 4, dans lequel la lamelle de séparation (20) présente une épaisseur comprise entre 80 et 500µm, et les encres à déposer présentent une viscosité au repos comprise entre 0.1 et 50 Pa.s.

6. Procédé de dépôt selon l'une quelconque des revendications 1 à 5, dans lequel la racle de dépôt (10) est espacée du substrat (1) d'une distance eᵣ non nulle, la lamelle de séparation (20) étant espacée du substrat (1) d'une distance eₗ inférieure ou égale à eᵣ.

7. Procédé de dépôt selon l'une quelconque des revendications 1 à 7, dans lequel les encres déposées sur le substrat (1) forment des cordons (31) s'étendant longitudinalement de manière coaxiale.

8. Procédé de dépôt selon l'une quelconque des revendications 1 à 7, dans lequel les encres sont contenues dans un réservoir (40) coopérant avec la racle de dépôt (10), la lamelle de séparation (20) s'étendant dans le réservoir (40) pour assurer une séparation physique entre celles-ci.

9. Procédé de dépôt selon l'une quelconque des revendications 1 à 8, dans lequel la lamelle de séparation (20) est fixe ou mobile en translation vis-à-vis de la racle de dépôt (10).

10. Procédé de dépôt selon l'une quelconque des revendications 1 à 9, dans lequel la racle de dépôt (10) présente une surface d'appui (11) plane et inclinée par rapport au substrat (1), à laquelle est assemblée la lamelle de séparation (20).

11. Procédé de dépôt selon l'une quelconque des revendications 1 à 10, dans lequel la racle de dépôt (10) présente un corps cylindrique (10a) et au moins une partie en saillie (10b) vis-à-vis de la surface du corps cylindrique (10a) et s'étendant radialement à la surface du corps cylindrique (10a), la racle de dépôt (10) étant disposé sur le substrat (1) de sorte que la partie en saillie (10b) est au contact de ce dernier.

12. Procédé de dépôt selon l'une quelconque des revendications 1 à 11, dans lequel le dépôt est de type à enduction ou de type à sérigraphie.
